# EUROPÄISCHE PATENTSCHRIFT

(11) **EP 1 871 825 B1**
(45) Veröffentlichungstag und Bekanntmachung des Hinweises auf die Patenterteilung: **06.08.2008**
(21) Anmeldenummer: 06724238.8
(22) Anmeldetag: 11.04.2006
(51) Int. Cl.: C08J 3/00, C08K 9/02

(54) **FORMMASSE UND FORMKÖRPER AUS THERMOPLASTISCHEM KUNSTSTOFF, ENTHALTEND NANOSKALIGE, ANORGANISCHE TEILCHEN, VERFAHREN ZUR HERSTELLUNG DER FORMMASSE UND DER FORMKÖRPER SOWIE DEREN VERWENDUNGEN**
THERMOPLASTIC MOLDING MATERIAL AND MOLDING ELEMENTS CONTAINING NANOMETRIC INORGANIC PARTICLES FOR MAKING SAID MOLDING MATERIAL AND SAID MOLDING ELEMENTS, AND USES THEREOF
MATIERE DE MOULAGE ET ELEMENTS DE MOULAGE EN THERMOPLASTIQUE CONTENANT DES PARTICULES INORGANIQUES NANOMETRIQUES, PROCEDE POUR REALISER CETTE MATIERE DE MOULAGE ET CES ELEMENTS DE MOULAGE, ET LEURS UTILISATIONS

(30) Priorität: 18.04.2005 DE 102005017950
(43) Veröffentlichungstag der Anmeldung: 02.01.2008
(73) Patentinhaber: Evonik Röhm GmbH, 64293 Darmstadt (DE)
(72) Erfinder: HÖSS, Werner, Shanghai 200237 (CN); ALBRECHT, Klaus, 55129 Mainz (DE); SADO, Krzysztof, 55128 Mainz (DE); HÄGER, Harald, 59348 Lüdinghausen (DE)
(86) Internationale Anmeldenummer: PCT/EP2006/003316
(87) Internationale Veröffentlichungsnummer: WO 2006/111302

(56) Entgegenhaltungen:
- US-A1- 2002 082 331
- US-A1- 2005 131 126
- US-B1- 6 469 073
- DATABASE WPI Section Ch, Week 200020 Derwent Publications Ltd., London, GB; Class A13, AN 2000-233101 XP002389257 -& JP 2000 053871 A (TORAY IND INC) 22. Februar 2000 (2000-02-22)

## Beschreibung

### Stand der Technik

EP 1357151 A1 beschreibt bimodale Mischungen von bisher nur unzureichend oder wenn überhaupt nur unter hohem Aufwand und damit verbundenen Nachteilen miteinander vermischbaren Polymeren, wie z.B. Polyethylenen unterschiedlichen Molekulargewichts. Eine gute Durchmischung der unterschiedlichen Polymerfraktionen wird insbesondere dadurch erreicht, dass die Mischungen mit einem Fluid im überkritischen Zustand, z.B. CO₂, bei hohen Drücken und Temperaturen in Kontakt gebracht werden und die Mischungen anschließend entspannt werden. Es wird erwähnt, dass sich das Verfahren auch zur Einarbeitung von Additiven oder Füllstoffen, wie z.B. Ruß, in Polymere eignen soll.

US 6,753,360 B2 beschreibt ein Verfahren zur Herstellung von verstärkten Polymeren mit verbesserten mechanischen Eigenschaften. Dabei werden Schichtsilikate mit einem Polymeren, z. B. Polypropylen, vermischt und mit einem Fluid im überkritischen Zustand, z.B. CO₂, bei hohen Drücken und Temperaturen in Kontakt gebracht. Dabei kommt es zu einer Vereinzelung der Schichten der Schichtsilikate zu plättchenförmigen Silikat-Partikeln in der Mischung. Durch eine anschließende, rasche Entspannung des Gemischs unter schlagartigem Druckabfall wird eine sehr gleichmäßige Dispergierung der vereinzelten Silikat-Partikel im Polymeren erreicht, wodurch ein entsprechend verstärktes Polymer resultiert.

Neben der Entwicklung kleinster Instrumente, "Micro-Lab" und Schaltkreisen oder Motoren, ist insbesondere die Nanochemie mit ihren Errungenschaften ins Blickfeld gerückt. Man denke an schmutz- und wasserabweisende Beschichtungen, kratzfeste Lacke, neuartige Füllstoffe für Autoreifen oder Farbschichten, die gegen Sprayattacken geschützt sind.

### Aufgabe und Lösung

Von der Einarbeitung nanoskaliger, anorganischer Teilchen in polymere Kunststoffe verspricht man sich eine Reihe von Vorteilen, die hier stichwortartig genannt seien.
■ Erhöhung der Oberflächenhärte und Kratz- bzw. Abriebfestigkeit
■ Erhöhung der Steifigkeit bei hoher Zähigkeit
■ Erhöhung des Brechungsindexes
■ Temperatur- Unabhängigkeit des Brechungsindexes
■ Reduzierung der (thermischen) Ausdehnung
■ Erzeugung von Barriere- Eigenschaften
■ Entspiegelung von Oberflächen
■ Verbessern des Brandverhaltens

Man verspricht sich insbesondere, dass die neuen oder verbesserten Eigenschaften unter Beibehaltung der bekannt guten Kunststoff-Eigenschaften, wie z. B. Transmission, Glasklarheit, Farblosigkeit sowie rheologischer und mechanischer Eigenschaften, erreicht werden.

Bei Einarbeitung von nanoskaligen, anorganischen Teilchen mittels dem Fachmann bekannten Verfahren wie der Compoundierung auf Einschnecken- oder Zweischneckenextrudern sowie Schmelzeknetern, besteht grundsätzlich das Problem, das sich die Primärteilchen unter Reduktion der Oberflächenenergie im Zuge der Mischung mit hochviskosen Schmelzen zu Aggregaten vereinen können. Diese Aggregate weisen häufig kaum noch oder nicht mehr die positiven Eigenschaften auf, die man sich von den Primärteilchen erhofft hat. Bei der Einarbeitung von nanoskaligen anorganischen Teilchen in thermoplastische Kunststoffe mittels der bekannten Verfahren des Standes der Technik, tritt die Aggregatbildung in einem Maße auf, die ein Erreichen der gesteckten Ziele bisher weitgehend verhindert hat.
US 6,753,360 B2 beschreibt ein Verfahren zur Herstellung von verstärkten Polymeren mit verbesserten mechanischen Eigenschaften. Es wurde als Aufgabe gesehen, ein gegenüber der US 6,753,360 B2 verbessertes Verfahren bereitzustellen, mit dem Kunststoffe bzw. eine Formmasse erhalten werden, die nanoskalige, anorganische Teilchen in möglichst homogener Dispergierung mit einem hohen Anteil an Primärteilchen enthalten.

Die US 6,753,360 B2 beschreibt die Einarbeitung von Schichtsilikaten in Form ihrer plättchenförmigen Primärteilchen. Plättchenförmige Nanoteilchen bedingen aufgrund der mit ihrer Geometrie verbundenen, kaum zu beherrschenden anisotropen Ausrichtung im Kunststoff einen hohen Grad an Anisotropie in den resultierenden Eigenschaften der modifizierten Kunststoffe. Es soll daher ein Verfahren bereitgestellt werden, dass sich insbesondere auch für nicht plättchenförmige Nanoteilchen eignet.

Ein weiteres Problem besteht in einer möglichen Feinstaubentwicklung durch die verwendeten nanoskaligen, anorganischen Teilchen während ihrer Verarbeitung. Feinstaubentwicklungen sind generell wegen der möglichen gesundheitlichen Risiken für den Menschen zu vermeiden. Bei plättchenförmigen Teilchen wie z. B. Schichtsilikaten kann bei der trockenen Einarbeitung in eine Mischung, wie in der US 6,753,360 B2, bereits eine gewisse Staubentwicklung auftreten. Im verstärktem Maße besteht dieses Problem allerdings, wenn nanoskalige, anorganische Teilchen mit ein maximalen Aspektverhältnis der Primärteilchen von höchstens 5 eingesetzt werden sollen, da das Potential zur Feinstaubentwicklung beim Hantieren nochmals erheblich höher ist als bei schichtartigen Teilchen, wie den oben erwähnten Schichtsilikaten, die erst durch den Schritt der Exfolierung ihre Eigenschaften als Nanopartikel erreichen. Viele der heute verfügbaren nanoskaligen Teilchen von technischem Interesse weisen eine solch Feinstaub begünstigende Geometrie der Primärteilchen auf. Hinzu kommt, dass durch stetig verbesserte Herstellungsverfahren, Nanoteilchenpräparationen mit immer höheren Primärteilchengehalten zur Verfügung stehen, so dass das Potential der Feinstaubfreisetzung parallel mit der Verbesserung der Herstellprozesse steigt. Es soll daher auch eine Verfahrensvariante bereitgestellt werden, bei der eine Feinstaubentwicklung gering gehalten oder ganz vermieden werden kann.

### Die Aufgabe wird gelöst durch ein

Verfahren zur Herstellung einer Formmasse oder eines Formkörpers aus thermoplastischem Kunststoff, enthaltend nanoskalige, anorganische Teilchen, wobei der thermoplastische Kunststoff im Schmelzezustand mit den nanoskaligen, anorganischen Teilchen und einem Lösungsvermittler in einem Extruder mit einer Schneckenförderung vermischt wird, wobei Drücke und Temperaturen eingestellt werden, bei denen der Kunststoff als Schmelze und der Lösungsvermittler im überkritischen Zustand vorliegt,
**dadurch gekennzeichnet, dass**
das Gemisch am Ausgang des Extruders durch einen Durchlassspalt von weniger als 20 µm in eine Entspannungszone gefördert wird und die Schmelze mit den inkorporierten, nanoskaligen, anorganischen Teilchen ausgetragen, nach dem Abkühlen zu einer Formasse zerkleinert wird oder in ein formgebendes Verarbeitungswerkzeug überführt und zu einem Formkörper geformt wird.

Bei Einsatz eines weiteren Extruders, insbesondere eines Entgasungsextruders, können flüchtige Bestandteile, wie der Lösungsvermittler aus der Mischung entfernt werden. Der Kunststoff mit den darin weitgehend homogen inkorporierten, nanoskaligen, anorganischen Teilchen können auf diese Weise aus dem zweiten Extruder ausgetragen und nach dem Erkalten zu einem Granulat geschnitten oder zu Pulver zerkleinert werden. Alternativ kann die Schmelze direkt zu einem Formkörper verarbeitet werden.

Die Erfindung betrifft weiterhin eine Formmasse oder einen Formkörper aus thermoplastischen Kunststoff erhältlich nach dem erfindungsgemäßen Verfahren, dadurch gekennzeichnet, dass darin nanoskalige, anorganischen Teilchen mit einem Anteil an Primärteilchen von über 50 %, bezogen auf die Zahl der Primärteilchen bzw. gegebenenfalls auf die Zahl von Primärteilchenüberstrukturen, die sich aus nicht mehr als 30 Primärteilchen zusammensetzen, und der Aggregate, enthalten sind. Die erfindungsgemäße Formmasse kann zur Herstellung von Formkörpern mittels thermoplastischer Verarbeitung, insbesondere Extrusion, Spritzguss oder Spritzprägen, verwendet werden.

### Ausführung der Erfindung

### Verfahren

Die Erfindung betrifft ein Verfahren zur Herstellung einer Formmasse oder eines Formkörpers aus einem thermoplastischem Kunststoff, enthaltend nanoskalige, anorganische Teilchen.

### Thermoplastische Kunststoffe

Der thermoplastische Kunststoff kann z. B. Polyamid, Polymethylmethacrylat-Kunststoff, schlagzäh modifiziertes Polymethylmethacrylat, Polycarbonat-Kunststoff sowie Polyestercarbonate, Polystyrol-Kunststoff, Styrol-Acryl-Nitril-Kunststoff, Polyethylentherephthalat-Kunststoff, glykolmodifizierter Polyethylentherephthalat-Kunststoff, Polyvinylchlorid-Kunststoff, transparente Polyolefin-Kunststoffe, Polyethylen, Polypropylen, Acrylnitril-Butadien-Stryrol (ABS)-Kunststoff, Cycloolefincopolymere (COC) und/oder eine Mischung (Blends) verschiedener thermoplastischer Kunststoffe sein.

### Nanoskalige Teilchen

Nanoskalige, anorganische Teilchen sind handelsüblich verfügbar oder können durch bekannte Verfahren, wie z. B. Fällungsverfahren, Sol-Gel-Verfahren oder Flammverfahren (Flamm-Ruß) gewonnen werden.

Die nanoskaligen, anorganischen Teilchen können z. B. aus Indium-Zinnoxid (ITO), Silica (SiO₂,), Zirkonoxid ZrO₂ ,Korund Al₂O₃ Aluminiumhydroxid (Al₂(OH)₃), Zinkoxid (ZnO), Titandioxid (TiO₂), BaSO₄ oder Ruß bestehen und eine mittlere Primärteilchengröße (in etwa der Durchmesser bei annähernd rund erscheinenden Teilchen) im Bereich von 4 nm bis 999 nm, bevorzugt von 4 nm bis 720 nm, insbesondere 2 bis 100 nm aufweisen. Vorteilhaft sind Teilchen mit einer mittleren Primärteilchengröße (Durchmesser) im Bereich der Wellenlänge des sichtbaren Lichts von etwa 380 bis 720 nm oder darunter, insbesondere weniger als 380 nm.

Die mittlere Primärteilchengröße kann der Fachmann z. B. mit Hilfe eines Mikroskops, z. B eines Phasenkontrastmikroskops, insbesondere eines Elektronenmikroskops (TEM) oder durch Mikrotomographie feststellen, z. B. durch Vermessen einer repräsentativen Anzahl von Teilchen (z. B. 50 oder > 50 Teilchen), durch ein Bildauswerteverfahren, bestimmt werden.

Zum Beispiel in Ruß-Präparationen liegen die Primärteilchen meist nicht einzeln sondern als mehr oder weniger regelmäßige strukturierte Primärteilchenüberstrukturen vor, die sich aus nicht mehr als 100, insbesondere aus nicht mehr als 50, bevorzugt nicht mehr als 15 Primärteilchen zusammensetzen können.

### Maximales Aspektverhältnis

Die erfindungsgemäß verwendeten nanoskaligen, anorganischen Teilchen sind in der Regel von annähernd kugelförmiger Gestalt. Als Maß der Geometrie-Annäherung an die Kugelform kann in bekannter Weise die Angabe eines Aspektverhältnisses dienen.

Die Erfindung eignet sich insbesondere zur Verarbeitung von nanoskaligen, anorganischen Teilchen mit einem maximalen Aspektverhältnis der Primärteilchen von höchstens 5, bevorzugt höchstens 3, bevorzugt höchstens 2, besonders bevorzugt höchstens 1,5. Unter dem maximalen Aspektverhältnis der Primärteilchen wird das maximal bildbare relative Verhältnis von zwei der drei Dimensionen Länge, Breite und Höhe verstanden. Dabei wird jeweils das Verhältnis der größten Dimension zu der kleinsten der anderen beiden Dimensionen gebildet. Ein Primärteilchen mit einer Länge 15 nm, einer Breite 5 nm und einer Höhe 10 nm, weist beispielsweise ein maximales Aspektverhältnis (von Länge zu Breite) von 3 auf. Primärteilchen mit einem maximalen Aspektverhältnis von 5 können z. B. kurze stäbchenförmige oder auch diskusförmige, tablettenähnliche Teilchen sein. Beträgt das maximale Aspektverhältnis der Primärteilchen beispielsweise höchstens 1,5 oder darunter, weisen die Primärteilchen eine mehr oder weniger kugelähnliche oder körnchenartige Gestalt auf. Im Gegensatz dazu weisen die Primärteilchen von Schichtsilikaten, wie sie z. B. in US 6,753,360 B2 eingesetzt werden, maximale Aspektverhältnisse von weit über 5, im Bereich von 20 oder darüber auf.

Bevorzugt werden die oben genannten, nanoskaligen, anorganischen Teilchen mit einem maximalen Aspektverhältnis der Primärteilchen von höchstens 5 in Form einer stabilisierten Dispersion in die Mischung eingebracht, in der die Teilchen zu mindestens 70 %, insbesondere zu mindestens 80, bevorzugt zu mindestens 90 oder zu mindestens 95 % als Primärteilchen oder als Primärteilchenüberstrukturen, die sich aus nicht mehr als 30, insbesondere aus nicht mehr als 20, bevorzugt nicht mehr als 15 Primärteilchen zusammensetzen, vorliegen.

In Ruß-Präparationen liegen die Primärteilchen meist nicht einzeln sondern als Primärteilchenüberstrukturen, die z. B. sich aus nicht mehr als 100, insbesondere aus nicht mehr als 50, bevorzugt nicht mehr als 15 Primärteilchen zusammensetzen vor. Die Primärteilchenüberstrukturen sind häufig charakteristisch für das Herstellverfahren und die anwendungstechnischen Eigenschaften der jeweiligen Präparationen.

Der Begriff Teilchen umfasst Primärteilchen, Primärteilchenüberstrukturen und deren Aggregate. Zu unterscheiden von Primärteilchen und Primärteilchenüberstrukturen sind die unerwünschten Aggregate von Primärteilchen oder die Aggregate von Primärteilchenüberstrukturen. Aggregate von Primärteilchen können sich aus zwei oder mehr Primärteilchen zusammensetzen, Die Aggregate von Primärteilchenüberstrukturen bestehen aus mehr Primärteilchen als die Primärteilchenüberstrukturen, häufig auch aus Vielfachen der Primärteilchenüberstrukturen. Die unerwünschten Aggregate können in Abwesenheit der Stabilisierung der Primärteilchen und Primärteilchenüberstrukturen während der Lagerung der Teilchen, der Dispersion oder während der Verarbeitung bei ungeeigneten Verfahrensbedingungen entstehen.

### Dispersionen

Bevorzugt werden die nanoskaligen, anorganischen Teilchen in Form einer Dispersion in die Mischung eingebracht werden. Dies hat den Vorteil, dass eine Feinstaubentwicklung bei der Einarbeitung vermieden wird. Dispersionen können gegebenenfalls auch als Suspensionen oder kolloidale Lösungen bezeichnet werden.

In der Regel enthalten die Dispersionen einen oder mehrere Stabilisatoren, die verhindern, dass die enthaltenen Primärteilchen oder gegebenenfalls Primärteilchenüberstrukturen während der Lagerung sich in unerwünschter Weise größere Aggregate ausbilden. Bekannte Stabilisatoren, die auch als Pigmentdispergiermittel bezeichnet werden, sind z. B. Emulgatoren, bekannt sind z. B. oberflächenaktive Polymere oder Phosphonsäurederivate, z. B. Phosphonsäurederivate, bei denen ein Teil des Moleküls unpolar ist.

Bevorzugt weist die Dispersion einen Feststoffanteil von 10 bis 40, insbesondere von 12 bis 25 Gew.-% an nanoskaligen, anorganischen Teilchen auf.

Die Dispersion der nanoskaligen, anorganischen Teilchen kann in einer Flüssigkeit vorliegen, die kein Lösungsvermittler im Sinne der Erfindung ist, z. B. in Wasser. Es kann sich demnach z. B. um eine wässrige Dispersion handeln. Dies hat den Vorteil, dass die Dispersion unabhängig von Lösungsvermittler dosiert werden kann.

Bevorzugt liegt die Dispersion der nanoskaligen, anorganischen Teilchen in einem, bei Raumtemperatur flüssigen Lösungsvermittler, z. B. Ethanol oder Methanol, vor, der bei Temperaturen, bei denen der Kunststoff als Schmelze vorliegt, beim Anlegen entsprechend hoher Drücke in einen überkritischen Zustand übergehen kann. Hier kann z. B. die gesamte für das Verfahren benötigte Menge an Lösungsvermittler in Form der Dispersion zugegeben werden. Es kann jedoch auch nur eine kleinere Menge der für das gesamte Verfahren benötigten Menge an Lösungsvermittler in Form der Dispersion zugegeben werden. Die übrige Menge wird dann separat dosiert, wobei sich um den gleichen oder einen anderen Lösungsvermittler, gegebenenfalls auch um einen bei Raumtemperatur gasförmigen Lösungsvermittler, z. B. CO₂, handeln kann.

Bevorzugt werden die oben genannten nanoskaligen, anorganischen Teilchen mit einem maximalen Aspektverhältnis der Primärteilchen von höchstens 5 in Form einer stabilisierten Dispersion in die Mischung eingebracht. In der Dispersion liegen die Teilchen zu mindestens 70 %, insbesondere zu mindestens 80, bevorzugt zu mindestens 90 oder zu mindestens 95 % als Primärteilchen oder als Primärteilchenüberstrukturen vor, wobei sich letztere in der Regel aus nicht mehr als 100, insbesondere aus nicht mehr als 50, bevorzugt nicht mehr als 15 Primärteilchen zusammensetzen.

### Lösungsvermittler

Lösungsvermittler im Sinne der Erfindung sind Substanzen, die bei Temperaturen, bei denen der Kunststoff als Schmelze vorliegt, z. B. bei 200 bis 350 °C oder bei 200 bis 300 °C, beim Anlegen von hohen Drücken, z. B. 70 bis 250 bar, in einen überkritischen Zustand übergehen können. Es sind Lösungsvermittler bevorzugt, die bei Drücken und Temperaturen, bei denen der Kunststoff als Schmelze und der Lösungsvermittler in einem überkritischen Zustand vorliegt, gegenüber dem thermoplastischen Kunststoff inert sind bzw. keine chemischen Reaktionen an diesem bewirken.

Geeignete Lösungsvermittler sind z. B. Kohlendioxid, Stickoxid (N₂O), Xenon, Krypton, Methanol, Ethanol, Isopropanol oder Isobutanol oder ein Gemisch der genannten Lösungsvermittler. Bevorzugt sind Kohlendioxid, Methanol, Ethanol, Isopropanol oder Isobutanol.

### Verarbeitungsbedingungen

Der thermoplastische Kunststoff kann zusammen mit den nanoskaligen, anorganischen Teilchen und einem Lösungsvermittler, bei Drücken und Temperaturen, bei denen der Kunststoff als Schmelze und der Lösungsvermittler in einem überkritischen Zustand vorliegt, in einem Extruder mit einer Schneckenförderung, einem Einschnecken- oder einem Mehrschneckenextruder, vermischt werden. Hierzu kann in bekannter Weise der Kunststoff über die Einzugszone des Extruders als Feststoff, meistens als Granulat oder Pulver, zugeführt, aufgeschmolzen und durch die Schnecke bzw. bei Mehrschneckenextruder durch die Schnecken gefördert und der erforderliche Druck und die erforderliche Temperatur zur Erreichung des überkritischen Zustand der Mischung eingestellt werden. Nach Vorliegen des Kunststoffs im geschmolzenen Zustand und bei einer Temperatur von 200 °C bis 350 °C oder 200 °C bis 300 °C, bevorzugt 220 °C bis 280 °C, und einem Druck von 70 bar bis 250 bar, bevorzugt 170 bar bis 230 bar, kann der jeweilige Lösungsvermittler in den Extruder über eine Dosierstelle mittels einer Pumpe zugeführt werden. Bevorzugt kann über eine weiteren Dosierstelle, die nachfolgend der Lösungsvermittler-Dosierstelle angebracht ist, die gewünschte Menge nanoskaliger anorganischer Teilchen als wässrige Dispersion oder als Dispersion in organischem Lösemittel zugeführt werden. Eine bevorzugte Verfahrensweise kann auch die Zuführung der Dispersion in einem geeigneten, bei den eingestellten Verfahrensparameter Druck und Temperatur überkritischen Zustand befindlichen Lösungsvermittler sein.

Druck und Temperatur müssen jeweils oberhalb der kritischen Temperatur und des kritischen Drucks des gewählten Lösungsvermittlers liegen.

Drücke und Temperaturen können dabei bevorzugt so gewählt werden, dass eine Schädigung des thermoplastischen Kunststoffs durch thermische Zersetzung oder andere Formen von Eigenschaftsverlusten nicht oder nur in sehr geringem Maße eintreten.

Beispielsweise weist Methanol eine kritische Temperatur von 240,5 °C und einen kritischen Druck von ca. 78,9 bar auf. Die Einarbeitung von nanoskaligen anorganischen Teilchen in den Kunststoff Polymethylmethacrylat, der bei 250 °C im Schmelzezustand verarbeitet werden kann, könnte somit z. B. bei 250 °C und 200 bar mit Methanol als Lösungsvermittler erfolgen.

Beispielsweise weist Ethanol eine kritische Temperatur von ca. 243 °C und einen kritischen Druck von ca. 63 bar auf. Die Einarbeitung von nanoskaligen, anorganischen Teilchen in den Kunststoff Polymethylmethacrylat, der bei 250 °C im Schmelzezustand verarbeitet werden kann, könnte somit z. B. bei 250 °C und 200 bar mit Ethanol als Lösungsvermittler erfolgen.

Gegebenenfalls kann der Lösungsvermittler Ethanol auch als Dispersionsflüssigphase für die nanoskaligen, anorganischen Teilchen dienen und zusammen mit Methanol als Lösungsvermittler für die Kunststoffschmelze eingesetzt werden.

Besonders bevorzugt wird das Verfahren ausgeführt, indem zunächst der thermoplastische Kunststoff, z. B. Polymethylmethacrylat, bei einer Temperatur von 200 °C bis 350 °C oder 200 °C bis 300 °C, bevorzugt 220 °C bis 280 °C, insbesondere 250 °C bis 270 °C und einem Druck von 70 bar bis 250 bar, bevorzugt 170 bar bis 230 bar, insbesondere 180 bar bis 220 bar im Extruder geschmolzen wird, ein geeigneter Lösungsvermittler in einer Konzentration von 10 bis 30 Gew.-%, bevorzugt 15 bis 25 Gew.-% bezogen auf den thermoplastischen Kunststoff zudosiert wird, eine 5 bis 50, bevorzugt 10 bis 30%-ige Dispersion (Gewicht/Gewicht) nanoskaliger Teilchen in dem gleichen oder einem anderen Lösungsvermittler, das ebenfalls bei den genannten Temperaturen und Drücken im Extruder in einem überkritischen Zustand vorliegt, eindosiert, so dass sich ein Gehalt an nanoskaligen Teilchen im Kunststoff bzw. bezogen auf den Kunststoff von 0,01 Gew.-% bis 20 Gew.-%, bevorzugt 0,1 Gew.-% bis 10 Gew.-%, insbesondere 1 Gew.-% bis 5 Gew.-% einstellt.

### Verfahrensvarianten

Die Verfahrensschritte können z. B. in folgender Reihenfolge ausgeführt werden:
i) Überführen des thermoplastischen Polymeren in den Schmelzezustand
ii) Zugabe der nanoskaligen, anorganischen Teilchen in Form einer Dispersion im Lösungsvermittler zu der Polymerschmelze und Mischen der Komponenten
iii) Überführung der Mischung in den überkritischen Zustand

Die Verfahrensschritte können alternativ in folgender Reihenfolge ausgeführt werden:
i) Überführen thermoplastischen Polymeren in den Schmelzezustand
ii) Gleichzeitiges oder anschließendes Einmischen des Lösungsvermittlers
iii) Überführung der Mischung in den überkritischen Zustand
iv) Zugabe der nanoskaligen, anorganischen Teilchen in Form einer Dispersion zu der überkritischen Mischung

Die Verfahrensschritte können weiterhin in folgender Reihenfolge ausgeführt werden:
i) Überführen thermoplastischen Polymeren in den Schmelzezustand
ii) Gleichzeitiges oder anschließendes Einmischen des Lösungsvermittlers
iii) Zugabe der nanoskaligen, anorganischen Teilchen in Form einer Dispersion
iv) Überführung der Mischung in den überkritischen Zustand

Der thermoplastische Kunststoff kann zusammen mit den nanoskaligen, anorganischen Teilchen und dem Lösungsvermittler, bei einer Temperatur von 200°C bis 300 °C und einem Druck von 70 bar bis 250 bar im Extruder vermischt werden.

Der thermoplastische Kunststoff kann z. B. bei einer Temperatur von 200 °C bis 300 °C und einem Druck von 70 bar bis 250 bar im Extruder geschmolzen werden, der Lösungsvermittler in einer Konzentration von 10% bis 30 Gew.-% bezogen auf den thermoplastischen Kunststoff zudosiert werden. Eine 5 bis 50%-ige (Gew.-%), bevorzugt 10 bis 30%-ige Dispersion nanoskaliger, anorganischer Teilchen in dem gleichen oder einem anderen Lösungsvermittler, der ebenfalls bei den genannten Temperaturen und Drücken im Extruder in einem überkritischen Zustand vorliegt, kann eindosiert werden, so dass sich nach Abzug der flüssigen bzw. gasförmigen Bestandteile ein Gehalt an nanoskaligen, anorganischen Teilchen im Kunststoff von 0,01 Gew.-% bis 20, insbesondere 0,1 bis 18, bevorzugt 1 bis 10 Gew.-% einstellt.

Als weitere Verfahrensvariante kann auch ein Formmassengranulat hergestellt werden, das nanoskalige, anorganische Teilchen enthält. Auch wenn sich die Formmasse einen hohen Anteil an unerwünschten Aggregaten enthält, werden diese bei unter Anwendung des erfindungsgemäßen Verfahrens in einer seiner möglichen Varianten erneut zu Primarteilchen oder gegebenenfalls Primärteilchenüberstrukturen dispergiert (s. die Beispiele 2 und 3).

### Durchlassspalt/Druckhalteventil

Die Wahl eines Durchlassspalts von weniger als 20 µm stellt eine spezielle technische Maßnahme dar, die zur Durchführung der Erfindung von besonderer Bedeutung ist (s. Beispiel 1). Die Maßnahme dient nicht nur zur Entspannung des Gemischs sondern vor allem dem Aufbau sehr hoher Scherraten. Die Wahl des Durchlassspalts von weniger als 20 µm gewährleistet, dass Gemisch diesen mit einer Scherrate von 10.000 bis 100.000, bevorzugt von 20.000 bis 70.000 s⁻¹ passiert. Es war nicht vorhersehbar, dass das Gemisch einen derart engen Durchlassspalt ohne technische Probleme würde passieren können. Beispiel 4 zeigt, dass ein Durchlassspalt von 25 µm bereits unbefriedigenden Ergebnissen führt.

Das Gemisch aus thermoplastischen Kunststoff, nanoskaligen anorganischen Teilchen und Lösungsvermittler im überkritischen Zustand wird am Ausgang des Extruders durch einen Durchlassspalt von weniger als 20 µm, z. B. 1 µm bis 20 µm bzw. 1 µm bis weniger als 20 µm, bevorzugt 2 µm bis 10 µm in ein Entspannungsgefäß, z. B. einen Behälter, eine Flash-Kammer oder einen weiteren Extruder, gefördert. Das Gemisch ist in diesem Zustand derart flüssig und besitzt einen fluiden, überkritischen Zustand, der weder als gasförmig noch als flüssig bezeichnet werden kann, so dass es den Durchlassspalt ohne technische Probleme mit sehr hoher Scherrate passieren kann.

Bevorzugt wird zur Bereitstellung des Durchlassspalts ein Druckhalteventil mit einem Ringspalt eingesetzt. Der Kolbendurchmesser kann z. B. 1 mm bis 10 mm, bevorzugt 2 mm bis 5 mm betragen. Die Spaltweite liegt bevorzugt im Bereich von 1 µm bis 20 µm bzw. 1 bis weniger als 20 µm, bevorzugt 2 µm bis 10 µm bei einer Spaltlänge von 5 mm bis 30 mm, bevorzugt 5 mm bis 15 mm.

Der Druckhalteventilausgang ist bevorzugt direkt mit einem weiteren Extruder, bevorzugt einem Entgasungsextruder, verbunden und ermöglicht das Druckentspannen der Mischung unter sehr hohen Scherraten, die zu der weitgehend homogenen Verteilung und der Erzeugung eines hohen Anteiles an Primärteilchen beitragen. Im weiteren Extruder bzw. Entgasungsextruder können flüchtige Bestandteile entfernt werden. Die Schmelze mit den inkorporierten, nanoskaligen, anorganischen Teilchen wird ausgetragen und kann entweder nach dem Abkühlen zu einer Formasse, einem Granulat oder Pulver, zerkleinert oder direkt in ein formgebendes Verarbeitungswerkzeug, z. B. eine Breitschlitzextrusionsdüse oder eine Spritzgussanlage bzw. eine Spritzgussform, überführt und dort unmittelbar zu einem Formkörper geformt werden.

### Formmasse/Formkörper

Die erfindungsgemäße Formmasse oder der Formkörper aus thermoplastischem Kunststoff ist durch das beschriebene Verfahren erhältlich.

Die Formmasse bzw. der Formkörper enthält die nanoskaligen, anorganischen Teilchen z. B. in Mengen von 0,01 Gew.-% bis 20 Gew.-%, bevorzugt 0,1 Gew.-% bis 10 Gew.-%, insbesondere 1 Gew.-% bis 5 Gew.-%.

Die Formmasse oder der Formkörper enthält dabei nanoskalige, anorganische Teilchen mit einem Anteil an Primärteilchen oder Primärteilchenüberstrukturen, den kleinsten Teilchen oder Untereinheiten, von über 50%, bevorzugt von mindestens 75%, insbesondere mindestens 90 %, bezogen auf die Zahl bzw. Summe oder Gesamtheit der Teilchen.

Liegen nanoskalige Teilchen überwiegend in Form von Primärteilchen vor, sind unter Aggregaten Teilchen zu verstehen, die aus zwei oder mehr Primärteilchen bestehen. Beispielsweise sind bei einem Anteil an Primärteilchen von 90 % somit 10 % der Teilchen Aggregate.

Liegen nanoskalige Teilchen überwiegend in Form von Primärteilchenüberstrukturen vor, die sich z. B. aus nicht mehr als 100 Primärteilchen oder einer geringeren Zahl von Primärteilchen zusammensetzen (z. B. bei Ruß-Präparationen), sind unter Aggregaten Teilchen zu verstehen die sich aus mehr Primärteilchen als die Primärteilchenüberstrukturen zusammensetzen und meist ihrerseits aus einer Mehrzahl oder Vielzahl von aggregierten Primärteilchenüberstrukturen bestehen.

Beispielsweise sind bei einem Anteil an Primärteilchenüberstrukturen von 90 % somit 10 % der Teilchen Aggregate.

Der Anteil an Primärteilchen in der Gesamtheit der Primärteilchen und der Aggregate bzw. der Primärteilchenüberstrukturen und deren Aggregate kann der Fachmann z. B. mit Hilfe eines Lichtmikroskops, eines Elektronenmikroskops (TEM) oder durch Mikrotomographie feststellen, z. B. durch Auswertung einer repräsentativen Anzahl von Teilchen (z. B. 50 oder > 50 Teilchen), durch ein Bildauswerteverfahren.

Bevorzugt enthält der thermoplastischen Kunststoff, bzw. die Formmasse oder der Formkörper nanoskalige, anorganische Teilchen Primärteilchen mit einem maximalen Aspektverhältnis von höchstens 5, insbesondere von höchstens 3, bevorzugt höchstens von 2, besonders bevorzugt von höchstens 1,5.

### Verwendung

Die erfindungsgemäße Formmasse kann zur Herstellung von Formkörpern mittels an sich bekannter thermoplastischer Verarbeitung, insbesondere Extrusion, Spritzguss oder andere bekannte Verfahren der Kunststoffverarbeitung verwendet werden.

### BEISPIELE

### Beispiel 1 (Erfindungsgemäß -Durchlassspalt 10 µm)

Auf einer Laborextrusionsanlage, bestehend aus einem Einschneckenextruder mit 45 mm Schneckendurchmesser und 36 D Schneckenlänge und einem angeflanschten weiteren Einschneckenextruder 45 mm Schneckendurchmesser und Schneckenlänge 24 D wurden Versuche zur Dispergierung nanoskaliger anorganischer Teilchen durchgeführt.

Mittels einer gravimetischen Dosiereinrichtung wird der Einzugszone des ersten Extruders 10kg/h einer Polymethylmethacrylat-Formmasse (Polymerisat aus 96 Gew.-% Methylmethacrylat und 4 Gew.-% Methylacrylat) als Granulat zugeführt. Nach dem Vorliegen einer homogenen thermoplastischen Schmelze wird in einer Mischzone, bestehend aus einem Cavity Transfer Mixer (CTM) mittels einer Dosierpumpe LEWA Methanol mit einem Druck von 200 bar und einer Menge von 2,0 kg/h in den Extruder gepumpt. In einer weiteren Mischzone, die ebenfalls mit einem CTM ausgestattet ist, wird mittels einer Membran-Dosierpumpe eine wässrige Dispersion von 25 % (Gew.-%) nanoskaligem SiO₂ mit einer mittleren Primärteilchengröße von 5 nm und einem maximalen Aspektverhältnis der Primärteilchen von weniger als 2 in einer Menge von 1,2 kg/h in den Extruder gepumpt.

Am Ende des Extruders ist ein Druckhalteventil angebracht, das über einen zylindrischen Ventileinsatz mit 3 mm verfügt. Bei einer Ventilstellung von 80 % des Ventilhubes wird ein **Durchlassspalt kleiner 20 µm, nämlich von 10 µm** eingestellt, der zu einem Druckniveau von 200 bar im Extruder führt. Die gemessene Schmelzetemperatur beträgt 250 °C.

Über das Druckhalteventil wird eine direkte Verbindung zum nachgeschalteten Extruder hergestellt. Nach passieren des Scherspaltes des Druckhalteventils, das mit extrem hoher Scherrate erfolgt, wird das Gemisch aus Polymer, Lösemittel, Wasser und darin inkorporierten nanoskaligen anorganischen Teilchen entspannt, die flüchtigen Anteile verdampft und über zwei Entgasungsöffnungen des Extruders abgezogen. Die Entgasungszonen werden bei unterschiedlichen Druckniveaus betrieben und sind vakuumtechnisch getrennt.

Die von den flüchtigen Anteilen befreite Polymerschmelze mit nanoskaligen anorganischen Teilchen wird über eine Lochdüse zu Strängen geformt, über ein Wasserbad abgezogen und mittels eines Granulators geschnitten. Von dem so erhaltenen Granulat werden auf einer Spritzgießmaschine Battenfeld BA 350 CD Plättchen in den Abmessungen 65 x 40 x 3 mm spritzgegossen. An den Plättchen wurde mittels eines Mikroskops die Verteilung der nanoskaligen anorganischen SiO₂-Teilchen untersucht.

Es sind keine Aggregate im Spritzplättchen erkennbar. Bei visueller Betrachtung zeigen die Plättchen sehr gute optische Eigenschaften des Ausgangsmaterials mit einer leichten Trübung. Der Anteil der Primärteilchen, bezogen auf Primärteilchen und Aggregate, kann durch Auswertung von elektronenmikroskopischen Bildern bestimmt werden und liegt in etwa bei 85 %.

### Beispiel 2 (Vergleichsbeispiel - ohne Durchlassspalt)

Auf einem Zweiwellenkneter Leistritz LMS 30.34 wird über eine gravimetrische Dosiereinrichtung der Fa. Engelhardt in die Einzugszone des Extruders 10 kg/h einer Polymethylmethacrylat-Formmasse (Polymerisat aus 96 Gew.-% Methylmethacrylat und 4 Gew.-% Methylacrylat) zugeführt, eingezogen und plastifiziert.
Über eine Dosiereinrichtung, bestehend aus einem Einspritzventil, einer Rohrleitung und einer Membranpumpe werden 1,2 kg/h der wässrigen Nanodispersion SiO₂ aus Beispiel 1 in den Extruder gepumpt. Die Mischzone des Extruders, in die die Nanodispersion zugepumpt wird, ist zur Erreichung einer bestmöglichen Mischwirkung mit Mischelementen und Knetblöcken ausgeführt, wie dies dem Fachmann bekannt ist und von Extuderlieferanten empfohlen wird.

In einer nachfolgenden Entgasungszone werden die flüchtigen Anteile entfernt, mittels einer Gießdüse werden Stränge gezogen, abgekühlt und mit einem Granulator geschnitten.

Vom erhaltenen Granulat wurden wie in Beispiel 1 beschrieben, Plättchen 65 x 40 x 3 mm spritzgegossen und visuell beurteilt. Deutlich sind größere, aggregierte, nanoskalige SiO₂-Teilchen zu erkennen. Der Anteil der Primärteilchen kann durch Auswertung von elektronenmikroskopischen Bildern bestimmt werden und liegt unterhalb von 20 %.

### Beispiel 3 (Erfindungsgemäß - Verarbeitung des Granulats aus Beispiel 2)

Das aus Beispiel 2 erhaltene Produkt wurde auf der Nano-Dispergieranlage gemäß Beispiel 1 mit der dort installierten gravimetrischen Dosiereinrichtung 10 kg/h der Einzugszone des Extruders zugeführt. Entsprechend Beispiel 1 wird in die erste Mischzone 2,0 kg/h Methanol zudosiert. Die eingestellten Parameter Druck und Temperatur waren mit den in Beispiel 1 verwendeten Einstellwerten identisch.
Vom erhaltenen Granulat wurden Plättchen spritzgegossen. Die hergestellten Spritzgießkörper zeigen nahezu agglomeratfreie, dispergierte Nanopartikel. Der Anteil der Primärteilchen kann durch Auswertung von elektronenmikroskopischen Bildern bestimmt werden und liegt in etwa bei 85 %.

### Beispiel 4 (Vergleichsbeispiel - Durchlassspalt 25 µm)

Beispiel 4 entspricht Beispiel 1 mit dem Unterschied, dass bei einer Ventilstellung von 40 % des Ventilhubes ein **Durchlassspalt von 25 µm** eingestellt wird. Vom erhaltenen Granulat werden wie in Beispiel 1 beschrieben, Plättchen 65 x 40 x 3 mm spritzgegossen und visuell beurteilt. Deutlich sind größere, aggregierte, nanoskalige SiO₂-Teilchen zu erkennen. Der Anteil der Primärteilchen kann durch Auswertung von elektronenmikroskopischen Bildern bestimmt werden und liegt unterhalb von 35 %.

### Beispiel 5 (Cassius'scher Goldpurpur)

Die wässrige Dispersion von nanoskaligem SiO₂ aus Beispiel 1 kann zu Testzwecken durch eine kolloidale Goldlösung, den sogeannten Cassius'schen Goldpurpur ersetzt werden. Die kolloidale Goldlösung enthält H₂O sowie die Elemente Au, Sn, Cl und gegebenenfalls SI; Ausgangsverbindung ist Tetrachlorohydrogenaurat (HAuCl₄) und hat eine dunkelrote, pupur-ähnliche Färbung. Der "Cassius'sche Goldpurpur" ist dem Fachmann bekannt. Die enthaltenen nanoskaligen Goldpartikel liegen überwiegend als Primärteilchen mit einer mittleren Primärteilchengröße im Bereich von 20 - 30 nm vor. Die vermehrte Bildung von Aggregaten in der kolloidalen "Gold"-Lösung wird durch einen Farbumschlag nach blau oder braun angezeigt.

Bei erfindungsgemäßer Vorgehensweise z. B. nach Beispiel 1 werden die "Gold"-Teilchen in eine Polymethylmethacrylat-Matrix, z. B. in einer Konzentration im Bereich von 10 ppm inkorporiert. Vom erhaltenen Granulat werden wie in Beispiel 1 beschrieben, Plättchen spritzgegossen und visuell beurteilt. Man erhält ein dunkelrot bis pupur-ähnlich schimmerndes Polymethylmethacrylat-Spritzgussteil. Aus einem Wellenlängenspektrum ergibt sich, das die Lage des Absorptionsmaximums im Bereich von 500 - 580 nm des Polymethylmethacrylat-Spritzgussteils und der kolloidalen Ausgangslösung nahezu übereinstimmt. Dies kann als Nachweis gelten, dass mittels des erfindungsgemäßen Verfahrens eine Agglomeration der aus der kolloidalen "Gold"-Lösung stammenden Primärpartikel weitgehend verhindert wird.

## Patentansprüche

1. Verfahren zur Herstellung einer Formmasse oder eines Formkörpers aus thermoplastischem Kunststoff, enthaltend nanoskalige, anorganische Teilchen, wobei der thermoplastische Kunststoff im Schmelzezustand mit den nanoskaligen, anorganischen Teilchen und einem Lösungsvermittler in einem Extruder mit einer Schneckenförderung vermischt wird, wobei Drücke und Temperaturen eingestellt werden, bei denen der Kunststoff als Schmelze und der Lösungsvermittler im überkritischen Zustand vorliegt,
**dadurch gekennzeichnet, dass**
das Gemisch am Ausgang des Extruders durch einen Durchlassspalt von weniger als 20 µm in eine Entspannungszone gefördert wird und die Schmelze mit den inkorporierten, nanoskaligen, anorganischen Teilchen ausgetragen, nach dem Abkühlen zu einer Formasse zerkleinert wird oder in ein formgebendes Verarbeitungswerkzeug überführt und zu einem Formkörper geformt wird.

2. Verfahren nach Anspruch 1, **dadurch gekennzeichnet, dass** die nanoskaligen, anorganischen Teilchen aus Indium-Zinnoxid (ITO), Silica (SiO₂), Aluminiumhydroxid (Al₂(OH)₃), Zinkoxid (ZnO), Titandioxid (TiO₂), BaSO₄ oder Ruß bestehen und eine mittlere Primärteilchengröße im Bereich von 4 bis 999 nm aufweisen.

3. Verfahren nach Anspruch 1 oder 2, **dadurch gekennzeichnet, dass** als Lösungsvermittler CO₂, N₂O, Xenon, Krypton, Methanol, Ethanol, Isopropanol oder Isobutanol oder ein Gemisch der genannten Lösungsvermittler verwendet wird.

4. Verfahren nach einem oder mehreren der Ansprüche 1 bis 3, **dadurch gekennzeichnet, dass** die nanoskaligen, anorganischen Teilchen in Form einer Dispersion in das Gemisch eingebracht werden.

5. Verfahren nach Anspruch 4, **dadurch gekennzeichnet, dass** die Dispersion einen Feststoffanteil von 5 bis 50 Gew.-% an nanoskaligen, anorganischen Teilchen aufweist.

6. Verfahren nach einem oder mehreren der Ansprüche 1 bis 5 , **dadurch gekennzeichnet, dass** nanoskalige, anorganische Teilchen mit ein maximalen Aspektverhältnis der Primärteilchen von höchstens 5 eingesetzt und in Form einer stabilisierten Dispersion in die Mischung eingebracht werden, in der die Teilchen zu mindestens 70 % als Primärteilchen oder Primärteilchenüberstrukturen, die sich aus nicht mehr als 30 Primärteilchen zusammensetzen, vorliegen.

7. Verfahren nach einem oder mehreren der Ansprüche 4 bis 6, **dadurch gekennzeichnet, dass** die Dispersion der nanoskaligen, anorganischen Teilchen in einer Flüssigkeit vorliegt, die kein Lösungsvermittler nach Anspruch 1 ist.

8. Verfahren nach Anspruch 7, **dadurch gekennzeichnet, dass** die Dispersion in Wasser vorliegt.

9. Verfahren nach einem oder mehreren der Ansprüche 1 bis 6, **dadurch gekennzeichnet, dass** die Dispersion der nanoskaligen, anorganischen Teilchen in einem Lösungsvermittler nach Anspruch 1 vorliegt.

10. Verfahren nach einem oder mehreren der Ansprüche 1 bis 9, **dadurch gekennzeichnet, dass** die Entspannungszone zur Entspannung der Mischung ein weiterer Schneckenextruder ist.

11. Verfahren nach Anspruch 10, **dadurch gekennzeichnet, dass** mittels des zweiten Schneckenextruders flüchtige Bestandteile abgeführt werden.

12. Verfahren nach Anspruch 1 bis 11, **dadurch gekennzeichnet, dass** der thermoplastische Kunststoff Polyamid, Polymethylmethacrylat-Kunststoff, schlagzäh modifiziertes Polymethylmethacrylat, Polycarbonat-Kunststoff, sowie Polyestercarbonate, Polystyrol-Kunststoff, Styrol-Acryl-Nitril-Kunststoff, Polyethylentherephthalat-Kunststoff, glykolmodifizierter Polyethylentherephthalat-Kunststoff, Polyvinylchlorid-Kunststoff, transparente Polyolefin-Kunststoff, Polyethylen, Polypropylen, Acrylnitril-Butadien-Stryrol (ABS)-Kunststoff, Cycloolefincopolymere (COC) und/oder eine Mischung (Blends) verschiedener thermoplastischer Kunststoffe ist.

13. Verfahren nach einem oder mehreren der Ansprüche 1 bis 12, **dadurch gekennzeichnet, dass** die Verfahrensschritte in folgender Reihenfolge ausgeführt werden:
i) Überführen des thermoplastischen Polymeren in den Schmelzezustand
ii) Zugabe der nanoskaligen, anorganischen Teilchen in Form einer Dispersion im Lösungsvermittler zu der Polymerschmelze und Mischen der Komponenten
iii) Überführung der Mischung in den überkritischen Zustand

14. Verfahren nach einem oder mehreren der Ansprüche 1 bis 12, **dadurch gekennzeichnet, dass** die Verfahrensschritte in folgender Reihenfolge ausgeführt werden:
i) Überführen thermoplastischen Polymeren in den Schmelzezustand
ii) Gleichzeitiges oder anschließendes Einmischen des Lösungsvermittiers
iii) Überführung der Mischung in den überkritischen Zustand
iv) Zugabe der nanoskaligen, anorganischen Teilchen in Form einer Dispersion zu der überkritischen Mischung

15. Verfahren nach einem oder mehreren der Ansprüche 1 bis 12, **dadurch gekennzeichnet, dass** die Verfahrensschritte in folgender Reihenfolge ausgeführt werden:
i) Überführen thermoplastischen Polymeren in den Schmelzezustand
ii) Gleichzeitiges oder anschließendes Einmischen des Lösungsvermittlers
iii) Zugabe der nanoskaligen, anorganischen Teilchen in Form einer Dispersion
iv) Überführung der Mischung in den überkritischen Zustand

16. Verfahren nach einem oder mehreren der Ansprüche 1 bis 15, **dadurch gekennzeichnet, dass** der thermoplastische Kunststoff zusammen mit den nanoskaligen, anorganischen Teilchen und dem Lösungsvermittler, bei einer Temperatur von 200°C bis 350 °C und einem Druck von 70 bar bis 250 bar im Extruder vermischt werden.

17. Verfahren nach einem oder mehreren der Ansprüche 1 bis 16, **dadurch gekennzeichnet, dass** der Lösungsvermittler in einer Konzentration von 10% bis 30 Gew.-%, bezogen auf den thermoplastischen Kunststoff, zudosiert wird

18. Verfahren nach einem oder mehreren der Ansprüche 1 bis 17, **dadurch gekennzeichnet, dass** ein Gehalt von 0,01 Gew.-% bis 20 Gew.-% an nanoskaligen, anorganischen Teilchen im Kunststoff eingestellt wird.

19. Verfahren nach einem oder mehreren der Ansprüche 1 bis 6, **dadurch gekennzeichnet, dass** zunächst der thermoplastische Kunststoff bei einer Temperatur von 200 °C bis 350 °C und einem Druck von 70 bar bis 250 bar im Extruder geschmolzen wird, der Lösungsvermittler in einer Konzentration von 10% bis 30 Gew.-% bezogen auf den thermoplastischen Kunststoff zudosiert wird, eine 5 bis 50%-ige Dispersion (Gewicht/Gewicht) nanoskaliger, anorganischer Teilchen in dem gleichen oder einem anderen Lösungsvermittler, der ebenfalls bei den genannten Temperaturen und Drücken im Extruder in einem überkritischen Zustand vorliegt, eindosiert wird, so dass sich ein Gehalt an nanoskaligen, anorganischen Teilchen im Kunststoff von 0,01 Gew.-% bis 20 Gew.-% einstellt.

20. Verfahren nach einem oder mehreren der Ansprüche 1 bis 19, **dadurch gekennzeichnet, dass** ein Druckhalteventil mit einem Ringspalt von 1 mm bis 10 mm Kolbendurchmesser, einer Spaltweite von 1 µm bis weniger als 20 µm und einer Spaltlänge von 5 mm bis 30 mm eingesetzt wird.

21. Verfahren nach einem oder mehreren der Ansprüche 1 bis 20, **dadurch gekennzeichnet, dass** das Gemisch den Durchlassspalt mit einer Scherrate von 10.000 bis 100.000 s⁻¹ passiert.

22. Formmasse oder Formkörper, erhältlich nach einem oder mehreren der Ansprüche 1 bis 21, **dadurch gekennzeichnet, dass** darin nanoskalige, anorganische Teilchen enthalten sind und der Anteil an Primärteilchen oder Primärteilchenüberstrukturen, die sich aus nicht mehr als 100 Primärteilchen zusammensetzen, über 50 %, bezogen auf die Zahl der Teilchen insgesamt, beträgt.

23. Formmasse oder Formkörper nach Anspruch 22, **dadurch gekennzeichnet, dass** die nanoskaligen, anorganischen Teilchen Primärteilchen mit einem maximalen Aspektverhältnis von höchstens 5 aufweisen.

24. Verwendung der Formmasse nach Anspruch 22 oder 23 zur Herstellung von Formkörpern mittels thermoplastischer Verarbeitung, insbesondere Extrusion, Spritzguss oder Spritzprägen.

## Claims

1. Process for the preparation of a moulding material or a moulding comprising a thermoplastic, containing nanoscale, inorganic particles, the thermoplastic being mixed in the molten state with the nanoscale inorganic particles and a solubilizer in an extruder with screw transport, pressures and temperatures at which the plastic is present as a melt and the solubilizer is present in the supercritical state being set, **characterized in that** the mixture is transported at the exit of the extruder through a passage of less than 20 µm into a flash zone and the melt is discharged with the incorporated, nanoscale, inorganic particles, comminuted after cooling to give a moulding material or transferred into a shaping processing tool and shaped to give a moulding.

2. Process according to Claim 1, **characterized in that** the nanoscale, inorganic particles consist of indium tin oxide (ITO), silica (SiO₂), aluminium hydroxide (Al₂(OH)₃), zinc oxide (ZnO), titanium dioxide (TiO₂), BaSO₄ or carbon black and have a mean primary particle size in the range from 4 to 999 nm.

3. Process according to Claim 1 or 2, **characterized in that** CO₂, N₂O, xenon, krypton, methanol, ethanol, isopropanol or isobutanol or a mixture of said solubilizers is used as the solubilizer.

4. Process according to one or more of Claims 1 to 3, **characterized in that** the nanoscale, inorganic particles are introduced in the form of a dispersion into the mixture.

5. Process according to Claim 4, **characterized in that** the dispersion has a solids content of 5 to 50% by weight of nanoscale, inorganic particles.

6. Process according to one or more of Claims 1 to 5, **characterized in that** nanoscale, inorganic particles having a maximum aspect ratio of the primary particles of not more than 5 are used and are introduced into the mixture in the form of a stabilized dispersion in which at least 70% of the particles are present as primary particles or primary particle superstructures which are composed of not more than 30 primary particles.

7. Process according to one or more of Claims 4 to 6, **characterized in that** the dispersion of the nanoscale, inorganic particles is present in a liquid which is not a solubilizer according to Claim 1.

8. Process according to Claim 7, **characterized in that** the dispersion is present in water.

9. Process according to one or more of Claims 1 to 6, **characterized in that** the dispersion of the nanoscale, inorganic particles is present in a solubilizer according to Claim 1.

10. Process according to one or more of Claims 1 to 9, **characterized in that** the flash zone for expanding the mixture is a further screw extruder.

11. Process according to Claim 10, **characterized in that** volatile constituents are removed by means of the second screw extruder.

12. Process according to any of Claims 1 to 11, **characterized in that** the thermoplastic is polyamide, polymethyl methacrylate plastic, impact-modified polymethyl methacrylate, polycarbonate plastic and polyester carbonates, polystyrene plastic, styrene-acrylate-nitrile plastic, polyethylene terephthalate plastic, glycol-modified polyethylene terephthalate plastic, polyvinyl chloride plastic, transparent polyolefin plastic, polyethylene, polypropylene, acrylonitrile-butadiene-styrene (ABS) plastic, cycloolefin copolymers (COC) and/or a blend of different thermoplastics.

13. Process according to one or more of Claims 1 to 12, **characterized in that** the process steps are carried out in the following sequence:
i) conversion of thermoplastic polymer into the molten state
ii) addition of the nanoscale, inorganic particles in the form of a dispersion in the solubilizer to the polymer melt and mixing of the components
iii) conversion of the mixture into the supercritical state

14. Process according to one or more of Claims 1 to 12, **characterized in that** the process steps are carried out in the following sequence:
i) conversion of thermoplastic polymer into the molten state
ii) simultaneous or subsequent mixing in of the solubilizer
iii) conversion of the mixture into the supercritical state
iv) addition of the nanoscale, inorganic particles in the form of a dispersion to the supercritical mixture.

15. Process according to one or more of Claims 1 to 12, **characterized in that** the process steps are carried out in the following sequence:
i) conversion of thermoplastic polymer into the molten state
ii) simultaneous or subsequent mixing in of the solubilizer
iii) addition of the nanoscale, inorganic particles in the form of a dispersion
iv) conversion of the mixture into the supercritical state

16. Process according to one or more of Claims 1 to 15, **characterized in that** the thermoplastic is mixed together with the nanoscale, inorganic particles and the solubilizer at a temperature of from 200°C to 350°C and a pressure of from 70 bar to 250 bar in the extruder.

17. Process according to one or more of Claims 1 to 16, **characterized in that** the solubilizer is metered in in a concentration of 10 to 30% by weight, based on the thermoplastic.

18. Process according to one or more of Claims 1 to 17, **characterized in that** a content of 0.01% by weight to 20% by weight of nanoscale, inorganic particles is established in the plastic.

19. Process according to one or more of Claims 1 to 6, **characterized in that** first the thermoplastic is melted at a temperature of from 200°C to 350°C and a pressure of from 70 bar to 250 bar in the extruder, the solubilizer is metered in in a concentration of from 10% to 30% by weight, based on the thermoplastic, a 5 to 50% strength dispersion (weight/weight) of a nanoscale, inorganic particle in the same or another solubilizer, which is likewise present in the extruder in a supercritical state at said temperatures and pressures, is metered in so that a content of the nanoscale, inorganic particles in the plastic of from 0.01% by weight to 20% by weight results.

20. Process according to one or more of Claims 1 to 19, **characterized in that** a pressure control valve having an annular gap of from 1 mm to 10 mm piston diameter, a gap width of from 1 µm to 20 µm and a gap length of from 5 mm to 30 mm is used.

21. Process according to one or more of Claims 1 to 20, **characterized in that** the mixture passes through the passage at a shear rate of 10 000 to 100 000 s⁻¹.

22. Moulding material or moulding, obtainable according to one or more of Claims 1 to 21, **characterized in that** nanoscale, inorganic particles are present and the proportion of primary particles or primary particle superstructures which are composed of not more than 100 primary particles, is more than 50%, based on the number of particles altogether.

23. Moulding material or moulding according to Claim 22, **characterized in that** the nanoscale, inorganic particles comprise primary particles having a maximum aspect ratio of not more than 5.

24. Use of the moulding material according to Claim 22 or 23 for the production of mouldings by means of thermoplastic processing, in particular extrusion, injection moulding or injection stamping.

## Revendications

1. Procédé pour la production d'une matière à mouler ou d'un corps moulé à base de matière synthétique thermoplastique, contenant des nanoparticules inorganiques, dans lequel la matière synthétique thermoplastique à l'état fondu est mélangée avec les nanoparticules inorganiques et un tiers-solvant dans une extrudeuse présentant une alimentation par vis, avec réglage de pressions et de températures auxquelles la matière plastique se trouve sous forme de masse fondue et le tiers-solvant est à l'état supercritique,
**caractérisé en ce que** le mélange à la sortie de l'extrudeuse est envoyé à travers un interstice de passage de moins de 20 µm dans une zone de détente et la masse fondue avec les nanoparticules inorganiques incorporées est déchargée et, après le refroidissement, fragmentée en une matière à mouler ou transférée dans un outil de transformation donnant une forme, et moulée en un corps moulé.

2. Procédé selon la revendication 1, **caractérisé en ce que** les nanoparticules inorganiques sont constituées d'indium-oxyde d'étain (ITO), de silice (SiO₂), d'hydroxyde d'aluminium [Al₂(OH)₃], d'oxyde de zinc (ZnO), de dioxyde de titane (TiO₂), de BaSO₄ ou de noir de carbone, et ont une taille de particule primaire dans la plage de 4 à 999 nm.

3. Procédé selon la revendication 1 ou 2, **caractérisé en ce qu'**on utilise comme tiers-solvant du CO₂, du N₂O, du xénon, du krypton, du méthanol, de l'éthanol, de l'isopropanol ou de l'isobutanol ou un mélange des tiers-solvants cités.

4. Procédé selon une ou plusieurs des revendications 1 à 3, **caractérisé en ce que** les nanoparticules inorganiques sont introduites sous forme d'une dispersion dans le mélange.

5. Procédé selon la revendication 4, **caractérisé en ce que** la dispersion présente une teneur en matières solides de 5 à 50 % en poids en nanoparticules inorganiques.

6. Procédé selon une ou plusieurs des revendications 1 à 5, **caractérisé en ce que** des nanoparticules inorganiques ayant un rapport longueur-diamètre maximum des particules primaires de 5 au maximum et sont introduites sous forme d'une dispersion stabilisée dans le mélange, dans lequel les particules se trouvent à raison d'au moins 70 % sous forme de particules primaires ou de superstructures de particules primaires qui ne se composent pas plus de 30 particules primaires.

7. Procédé selon une ou plusieurs des revendications 4 à 6, **caractérisé en ce que** la dispersion des nanoparticules inorganiques se trouve dans un liquide qui n'est pas un tiers-solvant selon la revendication 1.

8. Procédé selon la revendication 7, **caractérisé en ce que** la dispersion est dans l'eau.

9. Procédé selon une ou plusieurs des revendications 1 à 6, **caractérisé en ce que** la dispersion des nanoparticules inorganiques est dans un tiers-solvant selon la revendication 1.

10. Procédé selon une ou plusieurs des revendications 1 à 9, **caractérisé en ce que** la zone de détente pour la détente du mélange est une autre extrudeuse à vis.

11. Procédé selon la revendication 10, **caractérisé en ce que** des composants liquides sont éliminés au moyen de la deuxième extrudeuse.

12. Procédé selon l'une quelconque des revendications 1 à 11, **caractérisé en ce que** la matière synthétique thermoplastique est un polyamide, une matière plastique poly(méthacrylate de méthyle) un poly(méthacrylate de méthyle) modifié antichoc, une matière plastique polycarbonate, ainsi que des polyestercarbonates, une matière plastique polystyrène, une matière plastique styrène-acrylonitrile, une matière plastique poly(éthylène-téréphtalate), une matière plastique poly(éthylène-téréphtalate) modifiée par glycol, une matière plastique poly(chlorure de vinyle), une matière plastique polyoléfinique transparente, du polyéthylène, du polypropylène, une matière plastique acrylonitrile-butadiène (ABS), des copolymères de cyclo-oléfines (COC) et/ou un mélange (alliage) de diverses matières synthétiques thermoplastiques.

13. Procédé selon une ou plusieurs des revendications 1 à 12, **caractérisé en ce que** les étapes du procédé sont effectuées dans l'ordre suivant :
i) transformation du polymère thermoplastique en l'état de masse fondue
ii) addition des nanoparticules inorganiques sous forme d'une dispersion dans le tiers-solvant à la masse fondue de polymère et mélange des composants
iii) transformation du mélange en l'état supercritique.

14. Procédé selon une ou plusieurs des revendications 1 à 12, **caractérisé en ce que** les étapes du procédé sont effectuées dans l'ordre suivant :
i) transformation du polymère thermoplastique en l'état de masse fondue
ii) incorporation simultanée ou subséquente du tiers-solvant
iii) transformation du mélange en l'état supercritique.
iv) addition des nanoparticules inorganiques sous forme d'une dispersion au mélange supercritique.

15. Procédé selon une ou plusieurs des revendications 1 à 12, **caractérisé en ce que** les étapes du procédé sont effectuées dans l'ordre suivant :
i) transformation du polymère thermoplastique en l'état de masse fondue
ii) incorporation simultanée ou subséquente du tiers-solvant
iii) addition des nanoparticules inorganiques sous forme d'une dispersion
iv) transformation du mélange en l'état supercritique.

16. Procédé selon une ou plusieurs des revendications 1 à 15, **caractérisé en ce que** la matière synthétique thermoplastique conjointement avec les nanoparticules inorganiques et le tiers-solvant sont mélangés dans l'extrudeuse à une température de 200 °C à 350 °C et sous une pression de 70 bars à 250 bars.

17. Procédé selon une ou plusieurs des revendications 1 à 16, **caractérisé en ce que** le tiers-solvant est ajouté à une concentration de 10 % à 30 % en poids, par rapport à la matière synthétique thermoplastique.

18. Procédé selon une ou plusieurs des revendications 1 à 17, **caractérisé en ce qu'**on ajuste dans la matière plastique une teneur en nanoparticules inorganiques de 0,01 % en poids à 20 % en poids.

19. Procédé selon une ou plusieurs des revendications 1 à 6, **caractérisé en ce que** d'abord on faut fondre dans l'extrudeuse la matière synthétique thermoplastique à une température de 200 °C à 350 °C et sous une pression de 70 bars à 250 bars, on ajoute le tiers-solvant à une concentration de 10 % à 30 % en poids par rapport à la matière synthétique thermoplastique, on ajoute une dispersion à 5-50 % (poids/poids) de nanoparticules inorganiques, dans le même solvant ou dans un autre solvant, qui se trouve également en un état supercritique aux températures et pressions indiquées dans l'extrudeuse, de sorte qu'il s'ajuste une teneur en nanoparticules inorganiques de la matière plastique de 0,01 % en poids à 20 % en poids.

20. Procédé selon une ou plusieurs des revendications 1 à 19, **caractérisé en ce qu'**on utilise une soupape de retenue de pression ayant un espace annulaire de 1 mm à 10 mm de diamètre de piston, un jeu radial de 1 µm à moins de 20 µm et une longueur de fente de 5 mm à 30 mm.

21. Procédé selon une ou plusieurs des revendications 1 à 20, **caractérisé en ce qu'**on fait passer le mélange à travers la fente de passage à une vitesse de cisaillement de 10 000 à 100 000 s⁻¹.

22. Matière à mouler ou corps moulé, pouvant être obtenus selon une ou plusieurs des revendications 1 à 21, **caractérisés en ce que** des nanoparticules inorganiques y sont contenues et la proportion de particules primaires ou de superstructures de particules primaires qui ne se composent pas de plus de 100 particules primaires est supérieure à 50 %, par rapport au nombre total des particules.

23. Matière à mouler ou corps moulé selon la revendication 22, **caractérisés en ce que** les nanoparticules inorganiques comportent des particules primaires ayant un rapport maximum de la longueur au diamètre de 5 au maximum.

24. Utilisation de la matière à mouler selon la revendication 22 ou 23, pour la fabrication de corps moulés par transformation thermoplastique, en particulier extrusion, moulage par injection ou estampage par injection.
